# EUROPÄISCHE PATENTSCHRIFT

(11) **EP 0 355 488 B1**
(45) Veröffentlichungstag und Bekanntmachung des Hinweises auf die Patenterteilung: **07.06.1995**
(21) Anmeldenummer: 89114131.9
(22) Anmeldetag: 31.07.1989
(51) Int. Cl.: H04Q 3/545, H04M 3/54, H04M 9/00

(54) **Verfahren zur Durchführung einer Steuerprozedur im Zusammmenhang mit der Herbeiführung eines Haltezustandes einer Leitung in einem rechnergesteuerten Kommunikationssystem insbesondere einem Key-Kommunikationssystem**
Method for realizing a control procedure in combination with the realisation of a hold state of a line in a calculator-controlled communication system, especially a key telephone system
Méthode pour réaliser une procédure de commande en combinaison avec la réalisation d'un état de maintien d'une ligne dans un système de communication commandé par calculateur, en particulier un système téléphonique à touches

(30) Priorität: 18.08.1988 DE 3828106
(43) Veröffentlichungstag der Anmeldung: 28.02.1990
(73) Patentinhaber: SIEMENS AKTIENGESELLSCHAFT, 80333 München (DE)
(72) Erfinder: Böttger, Detlev, Dipl.-Ing., D-5840 Schwerte 4 (DE); Roth, Roland, D-9650 Gelsenkirchen (DE)

(56) Entgegenhaltungen:
- EP-A- 0 067 268
- EP-A- 0 195 635
- US-A- 4 529 843
- ERICSSON REVIEW, Band 60, Nr. 1, 1983, Seiten 7-13, Stockholm, SE; G. JISMALM: "Office communication system DIAVOX 406"

## Beschreibung

Die Erfindung betrifft ein Verfahren zur Durchführung einer Steuerprozedur im Zusammenhang mit der Möglichkeit, in einem rechnergesteuerten Kommunikationssystem eine externe Leitung in einen Haltezustand zu bringen, insbesondere in einem Key-Kommunikationssystem, mit einer zentralen Steuerrechnereinheit, mit einem Programmspeicher, einem u. a. Anlagenkonfigurationsdaten enthaltenden Arbeitsspeicher und einem benutzerindividuelle Daten enthaltenden Kundendatenspeicher, mit einer Koppeleinrichtung, an die Teilnehmerendeinrichtungen mit Ziffern und Funktionstasten anschließbar sind und mit einem Anlagenkomponenten verbindenden Systembus, wobei der vermittlungstechnische Zustand der externen Leitungen und gegebenenfalls der jeweils anderen Endgeräte dem Endgerät optisch anzeigbar sind.

Neuzeitliche rechnergesteuerte Kommunikationssysteme sind nicht nur zur eigentlichen Vermittlungssteuerung, sondern auch zu einer Steuerung bzw. Realisierung zusätzlicher, über den Vermittlungsvorgang hinausgehender Steuervorgänge befähigt. Durch diese zusätzlichen Steuervorgänge lassen sich u. a. Leistungsmerkmale realisieren, wobei eine große Anzahl unterschiedlichster Leistungsmerkmale bekannt ist. Derartige Leistungsmerkmale können entweder bereits bei Belegen der Vermittlungseinrichtung oder aber während einer bereits bestehenden Gesprächsverbindung eingeleitet werden. Dies kann beispielsweise durch die Wahl bestimmter Ziffern bzw. Ziffernkombinationen und/oder durch die Betätigung sog. Funktionstasten erfolgen. Solche neben der normalen Wähltastatur vorhandenen Funktionstasten können u.a. auch leitungs- bzw. teilnehmerindividuelle Tasten darstellen, durch deren Betätigung unmittelbar eine Belegung der betreffenden Leitung, insbesondere der externen Leitungen und die Verbindungsherstellung zu den internen Teilnehmern erfolgt. Bei sog. Key-Kommunikationssystemen wird an jeder Endeinrichtung der vermittlungstechnische Zustand aller übrigen Endeinrichtungen und der Zustand der einzelnen externen Leitungen angezeigt. Neben der Anzeige durch Leuchtelemente, die unmittelbar den einzelnen Funktionstasten zugeordnet und in der Regel in diese integriert sind, können dem Teilnehmer auch optische Hinweise in Form einer Anzeige auf dem an der Endeinrichtung vorhandenen Display gegeben werden.

Zu den in einem solchen Kommunikationssystem realisierbaren Leistungsmerkmalen zählen beispielweise die Verhinderung unerwünschter Verbindungen, die selbsttätige Rufweiterleitung, das Anklopfen und die Überführung zumindest einer externen Leitung, über die eine Gesprächsverbindung besteht, in den Haltezustand. Der Veröffentlichung Ericsson Review, Vol. 60 (1983), Nr. 1, Seiten 7 bis 13 ist u.a. zu entnehmen, daß es grundsätzlich zwei Zugriffsarten auf eine gehaltene Leitung gibt. Die eine besteht darin, daß sich nur derjenige Teilnehmer erneut auf diese gehaltene Leitung aufschalten kann, der sie in diese Halteposition gebracht hat. Die andere Möglichkeit besteht darin, daß diese gehaltene Leitung auch von anderen berechtigten Teilnehmern belegbar ist. Die letztgenannte Zugriffsart wird durch die Betätigung einer entsprechenden Taste in die Wege geleitet. Weiterhin ist durch diese Veröffentlichung bekannt, daß ein Teilnehmer, der eine Verbindung ins Halten gelegt hat, durch das System angerufen wird nach dem er aufgelegt hat.

Im Zusammenhang mit der Realisierung des Leistungsmerkmals "Überführung einer Leitung in den Haltezustand" ist es die Aufgabe der Erfindung, die Betriebsmöglichkeiten zu verbessern. Diese Aufgabe wird durch die Merkmale des Anspruches 1 gelöst.

Der wesentliche Aspekt des erfindungsgemäßen Verfahrens besteht darin, daß nach der Überführung der beteiligten Teilnehmerendeinrichtung in den Ruhezustand dadurch ein vollautomatischer Übergang von einem Haltezustand, bei dem nur der ursprüngliche Teilnehmer sich erneut aufschalten kann in einen Haltezustand, bei dem alle Teilnehmer mit einer entsprechenden Berechtigung sich aufschalten können, vorgenommen wird. Durch die Tatsache, daß von der die Verbindungsphasen überwachenden Rechnersteuerung erfindungsgemäß eine Information an die jeweils berechtigten Endeinrichtungen übermittelt wird, die einen optischen Hinweis darüber gibt, daß eine Aufschaltung auf diese betreffende Leitung erfolgen sollte, wird die Wahrscheinlichkeit für die Zuteilung eines Gesprächspartners für einen wartenden Teilnehmer erhöht. Findet eine solche Belegung nicht statt, so wird weiterhin versucht, dem wartenden Teilnehmer einen Gesprächspartner zu vermitteln. Es erfolgt die automatische Anwahl des ersten Teilnehmers, falls dies sein Vermittlungszustand zuläßt. Die optische Anzeige auf die allgemeine Belegbarkeit dieser Leitung kann dadurch erfolgen, daß das Leuchtelement, das der diese betreffenden Leitung zugeordneten Belegungstaste zugehörig ist, einen bestimmten Leuchtzustand einnimmt.

In den Fällen, in denen kein anderer Teilnehmer die wartende Leitung belegt, wird gemäß einer Weiterbildung der Erfindung innerhalb eines bestimmten Zeitraumes periodisch überprüft, ob derjenige Teilnehmer, der diese Verbindung ursprünglich in das "Halten" gebracht hat, inzwischen freigeworden ist.

Innerhalb dieses vorgegebenen Zeitraumes bis zur Feststellung des Freiwerdens ist dann weiterhin die in den Haltezustand überführte externe Leitung von den hierfür berechtigten Teilnehmern belegbar. Der Versuch, den wartenden Teilnehmer an einen Gesprächspartner zu vermitteln, wird erst eingestellt, wenn der freigewordene und automatisch angewählte Teilnehmer sich nicht meldet. In einem solchen Fall wird dann die bis dahin im Haltezustand verbliebene externe Leitung ausgelöst.

Weitere vorteilhafte Ausgestaltungen sind den restlichen Unteransprüchen zu entnehmen.

Das erfindungsgemäße Verfahren wird nachstehend anhand einer Figur erläutert.

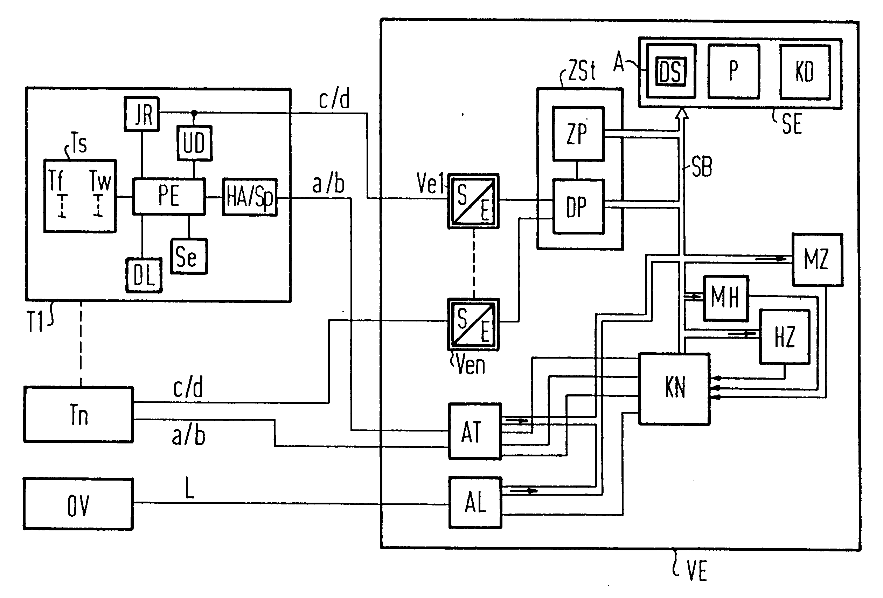

Die Figur zeigt im Blockschaltbild ausgewählte Funktionseinheiten eines Kommunikationssystems in Form einer Fernsprechvermittlungsanlage VE, an die Teilnehmerendeinrichtungen T1...Tn angeschlossen sind. Dieser Anschluß erfolgt im Ausführungsbeispiel bei einer Vermittlungsanlage, der die analoge Sprachübertragung zugrundeliegt, sternförmig über eine jeweils vieradrige Anschlußleitung, die aus einem Sprechadernpaar a/b und einem Signalisierungsadernpaar c/d besteht. Bei einem ausschließlich digitalen System wären die Steuerverbindung und die für die Übertragung der Sprachinformation vorgesehene Nutzverbindung auf einer zweiadrigen Anschlußleitung realisierbar, wobei dann mindestens ein Nutzkanal und ein Steuerkanal für jede Endeinrichtung durch eine bestimmte Zeitlage realisiert werden kann. Zur im wesentlichen prozeduralen Anpassung werden die Teilnehmerendeinrichtungen T1...Tn über eine Anschalteeinheit AT, die die Rufanschaltung beinhaltet, mit der elektronischen Koppeleinrichtung KN verbunden. Für die zu einer öffentlichen Vermittlungsstelle OV oder zu einem privaten Netz führenden Leitungen L erfolgt die Verbindung über eine Anschalteeinheit AL.

Die Steuerungsaufgaben der Anlage VE übernimmt die zentrale Rechnersteuerung ZSt, die über einen Systembus SB mit einer Speichereinheit SE, der Anschalteeinheit AT, der Koppeleinrichtung KN und weiteren Systemkomponenten, wie beispielsweise einer für die Bildung von Mehrfrequenzcodezeichen dienenden Einheit MZ, einer für die Erzeugung der Hörtöne zuständigen Einheit HZ und einem die Musikeinspielung für einen wartenden Teilnehmer ermöglichenden Baustein MH verbunden ist. Die Aufgaben der zentralen Rechnersteuerung sind im Ausführungsbeispiel auf zwei Prozessoren verteilt. Der Prozessor ZP dient beispielsweise der vermittlungs- und betriebstechnischen Steuerung. Durch den Prozessor DP erfolgt unter Einschaltung einer ein Sendeteil S und ein Empfangsteil E enthaltenden Verarbeitungseinheit Ve die Signalisierungsbearbeitung. Solche Verarbeitungseinheiten Ve1...Ven sind jeweils einem Signalisierungsadernpaar c/d zugeordnet.

Die Prozessoren ZP und DP haben über den Systembus SB Zugriff zu den in der Speichereinrichtung SE abgelegten Daten. Die Speichereinrichtung SE besteht aus einem Arbeitsspeicher A, einem Programmspeicher P und einem Kundendatenspeicher KD. Der Arbeitsspeicher A dient unter anderem der Aufnahme von Anlagenkonfigurationsdaten. Im Programmspeicher P sind das Anlagenbetriebsprogramm und die zu ihm gehörenden betriebstechnischen Daten abgespeichert. In dem Speicherteil KD sind die Kundendaten, wie z. B. die den einzelnen Teilnehmerendeinrichtungen T1...Tn zugeteilten Berechtigungen abgelegt. Das Konfigurieren dieser Daten kann z. B. über die Eingabetastatur einer als Betriebsterminal festlegbaren Endeinrichtung T1...Tn oder über ein gegebenenfalls vorgesehenes eigenständiges Betriebsterminal erfolgen.

Als Teileinheit des Arbeitsspeichers A können in einem gesonderten Speicherteil diejenigen Informationen abgelegt sein, die als vermittlungstechnische Informationen auf einem an der End einrichtung angeordneten Display DL dargestellt werden sollen. Die jeweils aktuellen Signalisierungsinformationen werden abhängig von dem vermittlungstechnischen Zustand durch die zentrale Rechnersteuerung ZSt festgelegt und aus dem Speicher DS der jeweiligen Endeinrichtung T1...Tn übermittelt. Stellt die Vermittlungsanlage VE ein Key-Kommunikationssystem dar, so kann die der jeweiligen Endeinrichtung übermittelte Information beispielsweise eine Aussage über den Belegungszustand einer Leitung L und/oder der übrigen Endeinrichtungen beinhalten. Auf diesem Display DL sind auch die im Zusammenhang mit dem Aufbau und dem Umkoppeln einer Verbindung für den Teilnehmer bestimmten Hinweise darzustellen. So können beispielsweise die für eine optische Bedienerführung vorgesehenen kurzen Informationstexte auf diesem Display DL angezeigt werden.

Für die Teilnehmerendeinrichtung T1 sind in der Figur einzelne Funktionskomponenten dargestellt. Über das jeweilige a/b-Adernpaar werden Sprachinformationen übertragen. Mit diesen Sprechadern ist die Sprechschaltung Sp verbunden. Sie dient im Zusammenhang mit dem Handapparat HA der Verarbeitung der übertragenen Sprachinformationen und bildet den Leitungsabschluß.

Mit der Einheit Ts ist schematisch eine Tastatur dargestellt, die mit einer in jeder Endeinrichtung T1...Tn zur Steuerung ihrer Funktionen vorhandenen und z. B. durch einen Prozessor realisierten Steuereinheit PE gekoppelt ist. Die Taste Tw symbolisiert eine übliche Wähltastatur. Die Taste Tf steht für eine Reihe von weiteren Tasten, insbesondere sogenannten Funktionstasten, durch deren Betätigung jeweils bestimmte Funktionsabläufe aktiviert werden können. Hierzu gehören mittels des Anlagenbetriebsprogrammes realisierbare Leistungsmerkmale, wie z. B das Leistungsmerkmal "Überführung einer Leitung L in den Haltezustand". Den Funktionstasten Tf können bestimmte Funktionen fest zugeordnet sein oder alternativ hierzu frei zugeordnet werden.

Mit der Steuereinheit PE sind ferner die Einheiten IR, UD, Se und DL verbunden. Die Einheit IR erkennt die Betätigung einzelner Tasten Tw, Tf, bildet entsprechende Signalisierungsinformationen und gibt diese über die Signalisierungsadern c/d an die Vermittlungsanlage VE oder unmittelbar an das der Teilnehmerendeinrichtung zugeordnete Display DL ab. Beispielsweise werden durch Wähltasten Tw erzeugte Anreize als Ziffern auf dem Display DL dargestellt. Die Einheit UD registriert Informationen, die einer Teilnehmerendeinrichtung über die jeweiligen c/d-Signalisierungsadern von der Vermittlungsanlage VE zur weiteren Verarbeitung zugeführt werden. Die Einheit Se ist als Speicher ausgebildet und dient beispielsweise der Aufnahme eines Betriebsprogrammes für die Steuereinheit PE und für zwischenzuspeichernde Daten.

Für die Realisierung von leistungsmerkmalspezifischen Steuerprozeduren beinhaltet die zentrale Rechnersteuerung ZSt einzelne Programmsteuerungen, die auf die in den entsprechenden Einheiten der Speichereinrichtung SE enthaltenen Steuerdaten zugreifen. So soll beispielsweise für die Vermittlungsanlage VE die Möglichkeit bestehen, eine externe Leitung L, auf der ein Gespräch geführt wird, in den Haltezustand zu überführen. Dies kann beispielsweise durch die Betätigung einer entsprechend programmierten Funktionstaste Tf vorgenommen werden. Die Rechnersteuerung veranlaßt dann aufgrund der bei der Betätigung der Taste Tf übermittelten Information, daß die betreffende externe Leitung L einen entsprechenden Leitungsabschluß erhält. Dies kann beispielsweise dadurch erfolgen, daß über die Koppeleinrichtung KN der Baustein MH auf diese Leitung geschaltet wird. Über diesen Baustein MH kann dann auf die im Haltezustand befindliche externe Leitung für den wartenden Teilnehmer eine Ansage erfolgen oder es kann Musik eingespielt werden. Bringt nun der Teilnehmer, der die externe Leitung L in den Haltezustand überführt hat, seine Teilnehmerendeinrichtung beispielsweise durch Auflegen des Handapparates oder durch eine diesem Auflegen äquivalente Handhabung in den Ruhezustand, so wird dadurch die diese Zustände erkennende Rechnersteuerung veranlaßt, bestimmte Folgefunktionen einzuleiten. Es wird sichergestellt, daß die betreffende Leitung von denjenigen Teilnehmern, denen die Berechtigung für externe Gesprächsverbindungen zugeteilt ist, belegt werden kann. Auf diese Belegbarkeit wird dann an der Teilnehmerstelle durch ein von der zentralen Rechnersteuerung ZSt initiiertes Aufmerksamkeitszeichen hingewiesen. Dies kann dadurch erfolgen, daß z. B. als optisches Aufmerksamkeitszeichen das Leuchtelement, das derjenigen Taste zugehörig ist, die als Leitungstaste der gehaltenen externen Leitung zugeordnet ist, in einen bestimmten signifikanten Leuchtzustand gebracht wurde. Hierzu wird an die einzelnen berechtigten Teilnehmerstellen eine Information übermittelt, aufgrund der die Steuereinheit PE der jeweiligen Teilnehmerendeinrichtung die entsprechende Ansteuerung des Leuchtelementes veranlaßt. Als derartiges Leuchtelement kann beispielsweise eine Leuchtdiode dienen, die in der jeweiligen Leitungstaste integriert ist. Die Aufschaltung einer Teilnehmerstelle an die gehaltene externe Leitung L könnte durch die Betätigung der genannten Leitungstaste erfolgen.

Wird die so gehaltene Leitung durch keinen der berechtigten Teilnehmer innerhalb einer vorgebbaren Zeit belegt, so versucht das System, denjenigen Teilnehmer, für den diese Gesprächsverbindung über die nunmehr gehaltene Leitung ursprünglich bestand, erneut anzurufen. "Teilnehmer" kann "Teilnehmerstelle" oder synonym hierzu "Teilnehmerendeinrichtung" bedeuten. Ist dieser Teilnehmer belegt, so wird durch die zentrale Rechnersteuerung ZSt periodisch in bestimmten kurzen Zeitabständen von beispielsweise einigen Sekunden überprüft, ob die betreffende Teilnehmerstelle frei geworden ist. Während dieser für einen bestimmten Zeitraum erfolgenden Überprüfung bleibt dann die gehaltene externe Leitung weiterhin von den hierzu berechtigten Teilnehmerstellen belegbar. Ist die Teilnehmerstelle, für die die Gesprächsverbindung auf der gehaltenen Leitung ursprünglich bestand, im Freizustand, so wird sie durch das System automatisch angewählt. Das bei einer solchen erneuten Anwahl abgegebene Rufsignal kann sich von dem beim Aufbau einer sonstigen Gesprächsverbindung abgegebenen Rufsignal unterscheiden. Meldet sich der Teilnehmer, so erfolgt die Anschaltung an die gehaltene externe Leitung. Wird dieser Ruf nicht beantwortet, so führt dies zu der endgültigen Auslösung der gehaltenen externen Leitung L.

## Patentansprüche

1. Verfahren zur Durchführung einer Steuerprozedur im Zusammenhang mit der Möglichkeit, in einem rechnergesteuerten Kommunikationssystem eine externe Leitung in einen Haltezustand zu bringen, insbesondere in einem Key-Kommunikationssystem (VE), mit einer zentralen Steuerrechnereinheit (ZSt), mit einem Programmspeicher (P), einem unter anderem Anlagenkonfigurationsdaten enthaltenden Arbeitsspeicher (A) und einem benutzerindividuelle Daten enthaltenden Kundendatenspeicher (KD), mit einer Koppeleinrichtung (KN), an die Teilnehmerendeinrichtungen (T1...Tn) mit Ziffern- (Tw) und Funktionstasten (Tf) anschließbar sind, und mit einem Anlagenkomponenten verbindenden Systembus (SB), wobei der vermittlungstechnische Zustand der externen Leitungen (L) und ggf. der jeweils anderen Endgeräte an jedem Endgerät optisch anzeigbar sind,
**dadurch gekennzeichnet**,
daß in den Fällen, in denen im Rahmen einer Gesprächsverbindung durch einen ersten internen Teilnehmer eine externe Leitung (L) in einen Haltezustand gebracht wurde, der nur die erneute Aufschaltung dieses betreffenden Teilnehmers zuläßt und von diesem Teilnehmer die Teilnehmerendeinrichtung (T1) in den Ruhezustand übergeführt wurde, diese externe Leitung (L) durch eine vollautomatische Änderung der Haltezustandsart von jedem anderen Teilnehmer, für den eine Zugriffsberechtigung zu einer solchen Leitung besteht, unmittelbar belegbar ist und daß von der Rechnersteuerung (ZSt) eine Information an die berechtigten Teilnehmerendeinrichtungen übertragen wird, die eine auf diese allgemeine Belegbarkeit hinweisende optische Anzeige bewirkt, daß - sofern keine Belegung innerhalb einer vorgegebenen Zeitspanne erfolgt - die Rechnersteuerung (ZSt) diesen ersten Teilnehmer (T1) - falls er sich im Freizustand befindet - automatisch anwählt und nach dem Melden des betreffenden Teilnehmers die Verbindung zu der externen Leitung (L) wieder herstellt.

2. Verfahren nach Anspruch 1,
**dadurch gekennzeichnet**,
daß im Falle des Belegtzustandes der betreffenden Teilnehmerendeinrichtung (T1) die Rechnersteuerung (ZSt) in bestimmten kurzen Zeitabständen periodisch innerhalb eines vorgebbaren Zeitraumes überprüft, ob die Teilnehmerendeinrichtung des den Haltezustand verursachenden ersten Teilnehmers (T1) frei geworden ist.

3. Verfahren nach Anspruch 2,
**dadurch gekennzeichnet**,
daß innerhalb des vorgegebenen Zeitraumes bis zur Feststellung des Freiwerdens durch die von der Rechnersteuerung (ZSt) bewirkte Überprüfung die externe Leitung (L) von den Teilnehmern, für die eine Zugriffsberechtigung zu einer solchen Leitung besteht, belegbar ist.

4. Verfahren nach Anspruch 1,
**dadurch gekennzeichnet**,
daß - sofern sich der erste Teilnehmer nach der automatischen Anwahl nicht meldet - die bis dahin im Haltezustand verbliebene externe Leitung (L) ausgelöst wird.

5. Verfahren nach Anspruch 1,
**dadurch gekennzeichnet**,
daß die Belegung der externen Leitung (L) durch die Betätigung derjenigen Leitungstaste erfolgt, die der betreffenden Leitung zugeordnet ist und deren gleichfalls zugeordnetes Leuchtelement durch einen bestimmten Leuchtzustand diese Belegbarkeit anzeigt.

6. Verfahren nach Anspruch 1,
**dadurch gekennzeichnet**,
daß das bei der automatischen Anwahl abgegebene Rufsignal sich von dem beim Aufbau einer sonstigen Gesprächsverbindung abgegebenen Rufsignal unterscheidet.

## Claims

1. Method for carrying out a control procedure in combination with the possibility of implementing a hold state of an external line in a computer-controlled communications system, especially a key telephone system (VE), comprising a central processor unit (ZSt), a program memory (P), a main memory (A) which contains inter alia system configuration data, and a customer data memory (KD) containing user-individual data, with a switching network (KN) to which subscriber terminals (T1...Tn) having number (Tw) and function keys (Tf) can be connected, and with a system bus (SB) connecting the system components, in which arrangement the switching state of the external lines (L) and, if necessary, the in each case other terminals can be visually indicated on each terminal, characterized in that, in the cases in which a hold state which only allows the reconnection of this respective subscriber, was implemented on an external line (L) by a first internal subscriber in the course of a call connection and this subscriber has brought the subscriber terminal (T1) into the idle state, this external line (L) can be directly seized by means of a fully automatic change of the type of hold state by any other subscriber who has access authorization for such a line, and in that the processor (ZSt) transfers an information item to the authorized subscriber terminals which effects a visual indication indicating this general seizability, in that - if no seizure occurs within a predetermined time interval - the processor (ZSt) automatically dials this first subscriber (T1) - if he is in the idle state - and reestablishes the connection to the external line (L) after the relevant subscriber answers.

2. Method according to Claim 1, characterized in that in the case where the relevant subscriber terminal (T1) is in the busy state, the processor (ZSt) periodically checks at particular short time intervals within a predeterminable period of time whether the subscriber terminal of the first subscriber (T1) causing the hold state has become available.

3. Method according to Claim 2, characterized in that the external line (L) can be seized by the subscribers who have an access authorization to such a line within the predetermined period of time until the detection of it becoming available by the check effected by the processor (ZSt).

4. Method according to Claim 1, characterized in that - if the first subscriber does not answer after the automatic dialling - the external line (L) which has remained in the hold state until then, is released.

5. Method according to Claim 1, characterized in that the external line (L) is seized by the activation of the line key which is allocated to the relevant line and the luminous element of which line key, similarly allocated, indicates this seizability by means of a particular luminous state.

6. Method according to Claim 1, characterized in that the ringing signal emitted during the automatic dialling differs from the ringing signal emitted during the setting up of any other call connection.

## Revendications

1. Procédé de mise en oeuvre d'une procédure de commande en combinaison avec la possibilité, dans un système de communication commandé par ordinateur, de mettre une ligne externe en un état de maintien, en particulier dans un système de communication à touches (VE), comportant une unité centrale d'ordinateur de commande (ZSt), une mémoire de programme (P), une mémoire de travail (A) qui contient entre autres des données concernant la configuration de l'installation et une mémoire de données de clients (KD) qui contient des données propres à l'utilisateur, comportant un réseau de connexion (KN) auquel on peut raccorder des équipements terminaux d'abonnés (T1 ... Tn) ayant des touches de chiffres (Tw) et des touches de fonctions (Tf), et comportant un bus de système (SB) qui relie des éléments de l'installation, l'état technique de commutation des lignes externes (L) et, le cas échéant, des autres terminaux pouvant être visualisé sur chaque terminal,
caractérisé par le fait que
dans les cas dans lesquels, lors d'une liaison de conversation, une ligne externe (L) a été mise à un état de maintien par un premier abonné interne, lequel état n'autorise que la nouvelle intrusion de cet abonné considéré, et cet abonné a fait passé l'équipement terminal d'abonné (T1) dans l'état de repos, cette ligne externe (L) peut être directement occupée par modification entièrement automatique du mode d'état de maintien par tout autre abonné, pour lequel il existe une autorisation d'accès à une telle ligne et l'unité de commande à ordinateur (ZSt) transmet aux équipements terminaux d'abonnés autorisés une information, qui provoque un affichage optique indiquant cette possibilité générale d'occupation, et, si aucune occupation ne s'est produite pendant un intervalle de temps prédéterminé, l'unité de commande à ordinateur (ZSt) sélectionne automatiquement ce premier abonné (T1), s'il se trouve à l'état libre, et, après la réponse de l'abonné considéré, rétablit la communication avec la ligne externe (L).

2. Procédé selon la revendication 1,
caractérisé par le fait que
dans le cas d'un état d'occupation de l'équipement terminal d'abonné considéré (T1), l'unité de commande à ordinateur (ZSt) contrôle périodiquement, pendant de courts laps de temps déterminés dans un intervalle de temps qui peut être prédéterminé, si l'équipement terminal d'abonné du premier abonné (T1), qui a provoqué l'état de maintien, est devenu libre.

3. Procédé selon la revendication 2,
caractérisé par le fait que
la ligne externe (L) peut être occupée par les abonnés, pour lesquels il existe une autorisation d'accès à une telle ligne, pendant l'intervalle de temps prédéterminé, jusqu'à ce que l'on constate le passage à l'état libre par le contrôle provoqué par l'unité de commande à ordinateur (ZSt).

4. Procédé selon la revendication 1,
caractérisé par le fait que
si le premier abonné ne répond pas après la sélection automatique, on libère la ligne externe (L), qui est restée jusqu'à cet instant à l'état de maintien.

5. Procédé selon la revendication 1,
caractérisé par le fait que
l'occupation de la ligne externe (L) s'effectue en actionnant la touche de ligne qui est associée à la ligne concernée et un élément lumineux également associé à cette ligne affiche cette possibilité d'occupation par un état lumineux déterminé.

6. Procédé selon la revendication 1,
caractérisé par le fait que
le signal d'appel fourni lors de la sélection automatique se distingue du signal d'appel fourni lors de l'établissement d'une autre liaison de conversation.
